# EUROPEAN PATENT APPLICATION

(11) **EP 2 500 682 A2**
(43) Date of publication of application: **19.09.2012**
(21) Application number: 12158999.8
(22) Date of filing: 12.03.2012
(51) Int. Cl.: F28F 3/12, F28F 9/26, F25B 21/02

(54) **Heat exchanger**

(30) Priority: 18.03.2011 JP 2011060234
(71) Applicant: Kabushiki Kaisha Toyota Jidoshokki, Kariya-shi, Aichi 448-8671 (JP)
(72) Inventor: Okuda, Motoaki, Kariya-shi, Aichi 448-8671 (JP); Yokomachi, Naoya, Kariya-shi, Aichi 448-8671 (JP); Ueda, Hiromi, Kariya-shi, Aichi 448-8671 (JP); Nakamura, Junki, Kariya-shi, Aichi 448-8671 (JP)
(74) Representative: TBK

(57) **Abstract**

A heat exchanger (1) comprises a housing (3), a guide member (42, 52), a return member (44, 54) and a discharge member (43, 53). The housing (3) includes a plurality of parallel flow passages (46a, 46b, 56a, 56b). The housing includes a first end face (41c, 51c) and a second end face (41d, 51d) each having openings (41f, 41g, 51f, 51g). The guide member (42, 52) is fixed to either the first face (41 c, 51 c) or the second end face (41 d, 51 d). The return member (44, 54) is fixed to the first end face (41 c, 51c) or the second end face (41d, 51d) in a manner to extend over a pair of the openings (41f, 41g, 51f, 51g), for connecting the pair of openings (41f, 41g, 51f, 51g) in a returned manner. The discharge member (43, 53) is fixed to either the first face (41 c, 51 c) or the second end face (41 d, 51 d). The plurality of flow passages (46a, 46b, 56a, 56b) are connected by the return member (44, 54) into a single flow passage. The guide member (42, 52) is provided in the opening (41f, 41g, 51f, 51g) on a most upstream side of the single flow passage. The discharge member (43, 53) is provided in the opening (41f, 41 g, 51f, 51g) on a most downstream side of the single flow passage. At least one of the guide member (42, 52), the return member (44, 54) and the discharge member (43, 53) integrally includes an attachment portion (42a, 43a, 44a, 52a, 53a, 54a) attached to the housing (3); and a protruding portion (42c, 43c, 44c, 52c, 53c, 54c) protruding more than the attachment portion (42a, 43a, 44a, 52a, 53a, 54a) toward the housing (3) and including an inclined surface (42e, 43e, 44e, 52e, 53e, 54e).

## Description

The present invention relates to a heat exchanger.

A heat exchanger described in Japanese Laid-Open Patent Publication No. 2001-4245 includes a box-shaped housing that opens upward, partition plates for partitioning the inside of the housing into a U-shaped flow passage, a guide tube defining a guide channel communicating with an end of the flow passage, a discharge tube defining a discharge channel communicating with the other end of the flow passage, and a thermal member attached to the housing in a manner to cover the opening of the housing. The thermal member includes a plate covering the upper opening of the housing, a Peltier device (thermoelectric conversion device) provided on the plate, and fins extending into the flow passage from the plate. Therefore, a heat medium introduced in the flow passage of the housing from the guide tube flows through the housing while exchanging heat with the fin, and is discharged from the discharge tube.

A heat exchanger described in Japanese Laid-Open Patent Publication No. 09-280772 includes a tubular housing, a tube plate covering one end of the housing, a hemispherical member covering the other end of the housing, and a heat transfer tube provided in the housing. A heat medium is introduced from a guide channel formed in proximity to the other end of the housing, exchanges heat with the heat transfer tube, and is discharged from a drain channel formed in proximity to the one end of the housing.

However, the heat medium causes a pressure drop in areas such as in proximity to the guide channel and the discharge channel and in a return area. Accordingly, a need exists for a heat exchanger having a structure that is easily formed and capable of feeding a heat medium more smoothly.

In one aspect of the invention, a heat exchanger (1) comprising: a housing (3) comprising a plurality of parallel flow passages (46a, 46b, 56a, 56b), the plurality of flow passages (46a, 46b, 56a, 56b) including a first end and a second end; a first end face (41c, 51c) having openings (41f, 41g, 51f, 51g) open to the first end of the plurality of flow passages (46a, 46b, 56a, 56b); and a second end face (41d, 51d) having openings (41f, 41g, 51f, 51g) open to the second end of the plurality of flow passages (46a, 46b, 56a, 56b); a guide member (42, 52) fixed to either the first face (41c, 51c) or second end face (41d, 51d) at a position of one of the openings (41f, 41g, 51f, 51g) and having a guide channel (42f, 52f); a return member (44, 54), fixed to the first end face (41c, 51c) in a manner to extend over a pair of the openings (41f, 41g, 51f, 51g) in the first end face (41c, 51c) or fixed to the second end face (41d, 51d) in a manner to extend over a pair of the openings (41f, 41g, 51f, 51g) in the second end face (41d, 51d), for connecting the pair of openings (41f, 41g, 51f, 51g) in a return manner; and a discharge member (43, 53) fixed to either the first face (41c, 51c) or second end face (41d, 51d) at the position of one of the openings (41f, 41g, 51f, 51g) and having a discharge channel (43f, 53f), is provided. The plurality of flow passages (46a, 46b, 56a, 56b) are connected by the return member (44, 54) into a single flow passage. The guide member (42, 52) is provided in the opening (41f, 41g, 51f, 51g) on a most upstream side of the single flow passage. The discharge member (43, 53) is provided in the opening (41f, 41g, 51f, 51g) on a most downstream side of the single flow passage. At least one of the guide member (42, 52), the return member (44, 54) and the discharge member (43, 53) integrally includes an attachment portion (42a, 43a, 44a, 52a, 53a, 54a) attached to the housing (3); and a protruding portion (42c, 43c, 44c, 52c, 53c, 54c) protruding more than the attachment portion (42a, 43a, 44a, 52a, 53a, 54a) toward the housing (3) and including an inclined surface (42e, 43e, 44e, 52e, 53e, 54e) inclining relative to a flow direction.

In one embodiment, the protruding portion (42c, 43c, 44c, 52c, 53c, 54c) may be fitted into the opening (41f, 41g, 51f, 51g) of the housing (3).

In another embodiment, a seal member (47a, 47b, 47c, 57a, 57b, 57c) may be provided between the attachment portion (42a, 43a, 44a, 52a, 53a, 54a) and the housing (3).

In another embodiment, the guide member (42, 52) may comprise the protruding portion (42c, 52c), the protruding portion (42c, 52c) including the inclined surface (42e, 52e) for enlarging a cross section of the flow passage (46a, 46b, 56a, 56b) as the protruding portion (42c, 52c) is farther from the guide channel (42f, 52f), and the discharge member (43, 53) comprises the protruding portion (43c, 53c), the protruding portion (43c, 53c) including the inclined surface (43e, 53e) for reducing a cross section of the flow passage (46a, 46b, 56a, 56b) as the protruding portion (43c, 53c) is closer to the discharge channel (43f, 53f).

In another embodiment, the guide member (42, 52), the return member (44, 54 and the discharge member (43, 53) may include the attachment portion (42a, 43a, 44a, 52a, 53a, 54a) and the protruding portion (42c, 43c, 44c, 52c, 53c, 54c) are made of resin.

In another embodiment, the heat exchanger (1) may further comprise a thermal member (2) for exchanging heat with a heat medium in the flow passage (46a, 46b, 56a, 56b). The thermal member (2) may include a Peltier device (2a) having a pair of heat sides, one of the heat sides absorbing heat and the other dissipating heat; a first substrate (2b) brought into contact with the one of the heat sides; and a first fin (2d) provided on the first substrate (2b). The first fin (2d) may be located in the flow passage (46a, 46b).

In another embodiment, the thermal member (2) may include a second substrate (2c) brought into contact with the other heat side of the Peltier device (2a); and a second fin (2e) provided on the second substrate (2c), and the housing (3) may include a first case (40) where the flow passage (46a, 46b) provided with the first fin (2d) therein is formed; and a second case (50) where the flow passage (56a, 56b) provided with the second fin (2e) therein is formed.

In another embodiment, the housing (3) may include a first case (40) and a second case (50) that are stacked in a thickness direction, wherein each of the first case (40) and the second case (50) has the guide member (42, 52), the return member (44, 54) and the discharge member (43, 53).

In another embodiment, the flow direction of a heat medium in the first case (40) may be opposed to the flow direction of a second heat medium in the second case (50).
Fig. 1 is a block diagram of a heat exchange system;
Fig. 2 is a perspective view of the heat exchanger;
Fig. 3 is an exploded perspective view of the heat exchanger;
Fig. 4 is a cross-sectional view taken along the line IV-IV of Fig. 2;
Fig. 5 is a cross-sectional view taken along the line V-V of Fig. 2;
Fig. 6 is a cross-sectional view taken along the line VI-VI of Fig. 2; and
Fig. 7 is a perspective view of an elastic member.

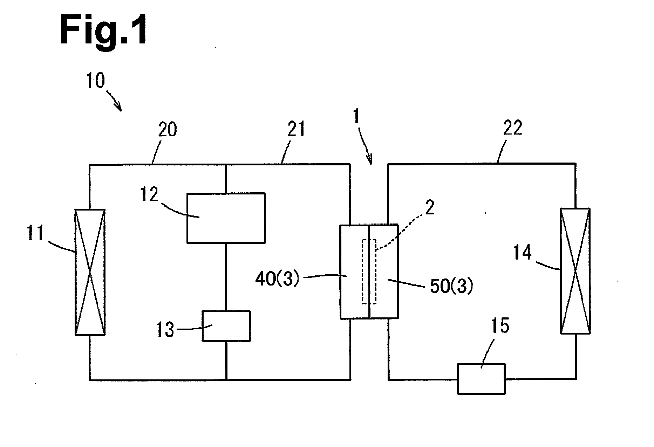

An embodiment of the present invention will be described with reference to Figs. 1 to 7. As illustrated in Fig. 1A, a heat exchange system 10 is provided for a vehicle, for example, and includes a heat exchanger (heating and cooling unit) 1, a radiator 11, and an indoor heat exchanger 14. The radiator 11 is connected to an engine 12 of the vehicle by a pipe 20. A pump 13 provided in the middle of the pipe 20 circulates a first heat medium (coolant fluid) between the engine 12 and the radiator 11. The first heat medium receives heat from the engine 12 and releases the heat from the radiator 11 to outside air.

As illustrated in Fig. 1, the heat exchanger 1 is connected to the radiator 11 in parallel with the engine 12 by a pipe 21 connected to the pipe 20. The first heat medium is cooled by receiving cold from the heat exchanger 1 via the pipes 20 and 21. Therefore, the first heat medium can be cooled by not only the radiator 11 but also the heat exchanger 1.

As illustrated in Fig. 1, the heat exchanger 1 is connected by a pipe 22 to the indoor heat exchanger 14. A pump 15 provided in the middle of the pipe 22 circulates a second heat medium (coolant fluid) between the heat exchanger 1 and the indoor heat exchanger 14. The second heat medium receives heat from the heat exchanger 1 to release the heat from the indoor heat exchanger 14 to indoor air. Therefore, it is possible to heat the interior by the indoor heat exchanger 14.

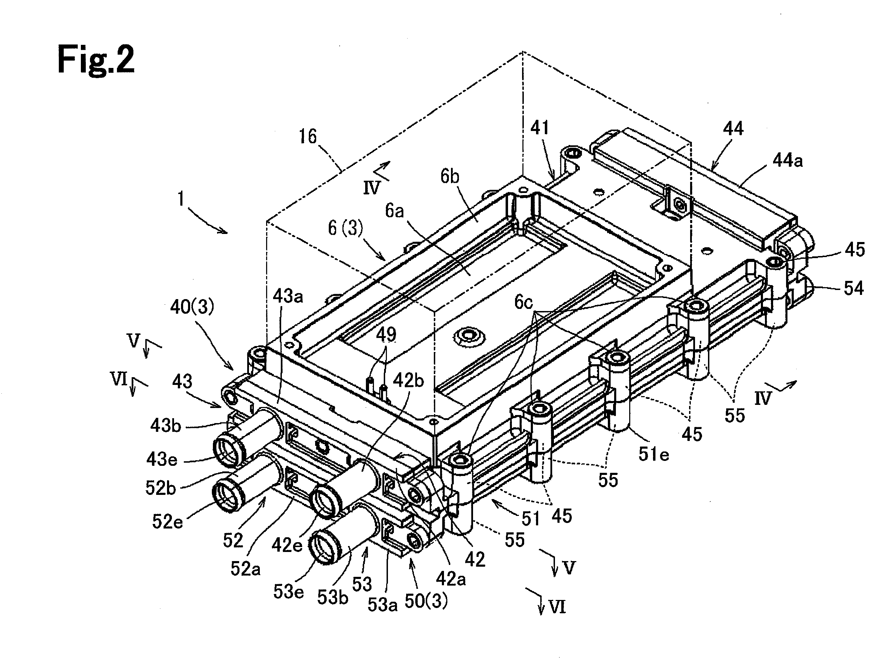

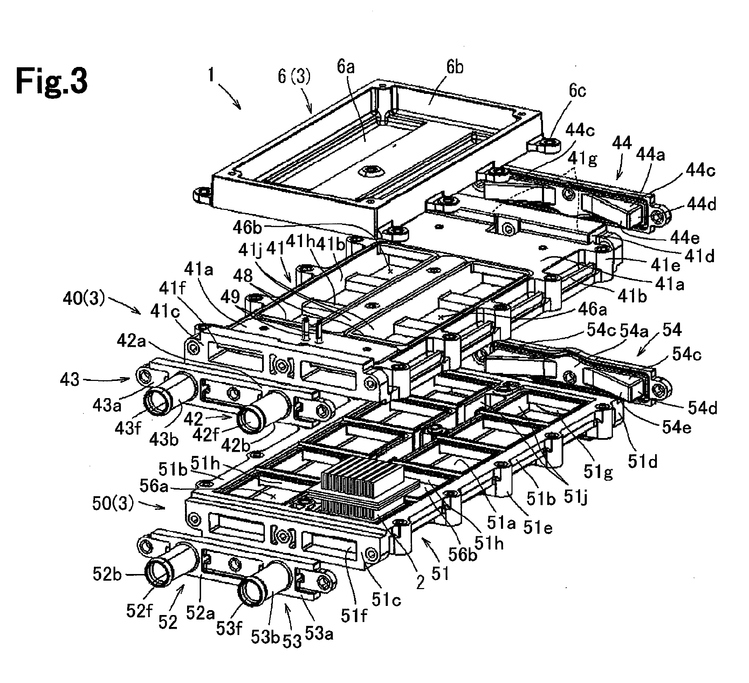

As illustrated in Figs. 2 and 3, the heat exchanger 1 includes a housing 3 and a plurality of Peltier modules (thermal members) 2 provided in the housing 3. The housing 3 includes a first case 40, a second case 50, and a converter case 6, which are stacked in the thickness direction.

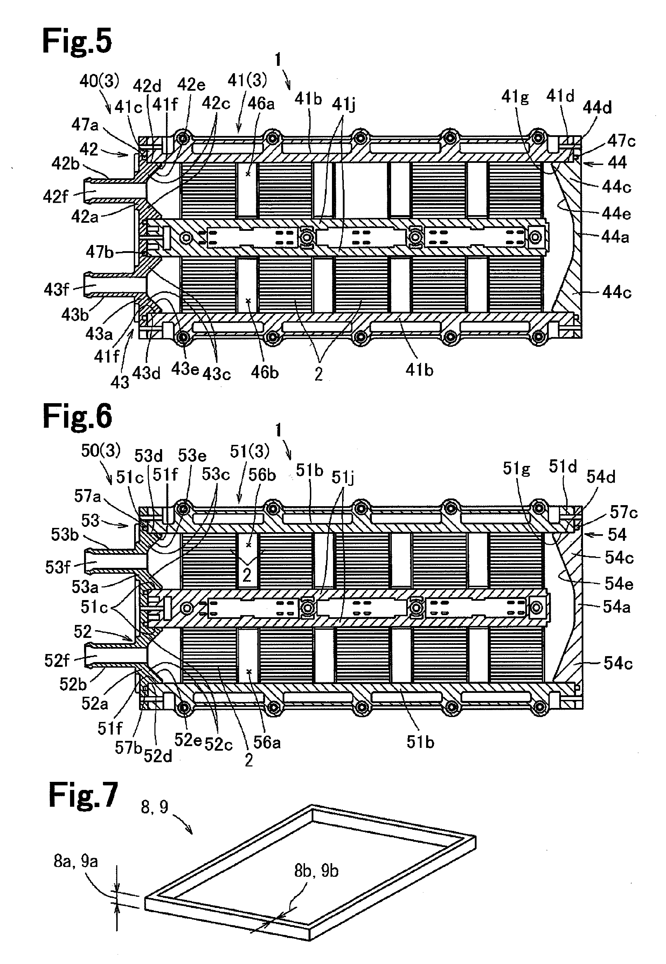

As illustrated in Figs. 3 and 5, the first case 40 includes a case body 41. The case body 41 is made of resin and molded with a molding die. The case body 41 includes a top portion 41a, side walls 41b extending downward from edges on both sides of the top portion 41a, a first end face 41c extending downward from a front edge of the top portion 41a, and a second end face 41d extending downward from a back edge of the top portion 41a that are integrally formed. A pair of partition plates 41j are formed on the top portion 41a to extend from the front edge to the back edge to partition the inside of the first case 40. A plurality of parallel flow passages 46a and 46b are formed by the partition plates 41j in the first case 40.

As illustrated in Figs. 3 and 6, the second case 50 includes a case body 51. The case body 51 is made of resin and molded with a molding die. The case body 51 includes a bottom portion 51a, side walls 51b extending upward on edges on both sides of the bottom portion 51a, a first end face 51c extending upward on a front edge of the bottom portion 51a, and a second end face 51d extending upward on a back edge of the bottom portion 51a that are integrally formed. A pair of partition plates 51j are formed on the bottom portion 51a to extend from the front edge to the back edge to partition the inside of the second case 50. A plurality of parallel flow passages 56a and 56b are formed by the partition plates 51j in the second case 50.

As illustrated in Figs. 3, 5 and 6, the case bodies 41 and 51 include beams 41h and 51h extending between the partition plates 41j and 51j and the side walls 41b and 51b. The beams 41h and 51h are apart from the top portion 41a and the bottom portion 51a respectively to avoid the blockage of the flow passages 46a, 46b, 56a and 56b. The case bodies 41 and 51 are partitioned into a plurality of accommodating areas (for example, 10 accommodating areas) by the beams 41h and 51h, the partition plates 41j and 51j, and the side walls 41b and 51b. The upper part of each Peltier module 2 is housed in each accommodating area of the case body 41. The lower part of each Peltier module 2 is housed in each accommodating area of the case body 51.

As illustrated in Figs. 3, 5 and 6, first openings 41f and 51f open to the flow passages 46a, 46b, 56a and 56b are formed on the first end faces 41c and 51c. Guide members 42 and 52 and discharge members 43 and 53 are attached to the first end faces 41c and 51c. Second openings 41g and 51g open to the flow passages 46a, 46b, 56a and 56b are provided in the second end faces 41d and 51d. Return members 44 and 54 are attached to the second end faces 41d and 51d.

As illustrated in Figs. 3, 5 and 6, the guide members 42 and 52 and the discharge members 43 and 53 are made of resin and molded with a molding die. The guide members 42 and 52 and the discharge members 43 and 53 include plate-shaped attachment portions 42a, 43a, 52a, and 53a attached to the first end faces 41c and 51c. The attachment portions 42a and 52a and the attachment portions 43a and 53a are integrally molded.

As illustrated in Figs. 3, 5 and 6, the guide members 42 and 52 include guide tubes 42b and 52b protruding from the attachment portions 42a and 52a. Guide channels 42f and 52f communicating with the first flow passages 46a and 56a are formed in the guide tubes 42b and 52b and the attachment portions 42a and 52a. The discharge members 43 and 53 include discharge tubes 43b and 53b protruding from the attachment portions 43a and 53a. Discharge channels 43f and 53f communicating with the second flow passages 46b and 56b are formed in the discharge tubes 43b and 53b and the attachment portions 43a and 53a.

As illustrated in Figs. 3, 5 and 6, protruding portions 42c, 43c, 52c and 53c protruding toward the cases 40 and 50 are formed on the attachment portions 42a, 43a, 52a and 53a. Each protruding portion 42c, 43c, 52c and 53c is generally triangular, and includes an outer surface 42d, 43d, 52d and 53d and an inclined surface 42e, 43e, 52e and 53e, respectively. The protruding portions 42c, 43c and 52c, 53c are fitted into the first openings 41f and 51f. Each of the outer surface 42d, 43d, 52d and 53d contacts with an inner circumferential surface of the first openings 41f and 51f. The inclined surfaces 42e and 52e are inclined relative to the guide channels 42f and 52f such that, as the inclined surfaces 42e and 52e are farther from the guide channels 42f and 52f, the cross sections of the flow passages become larger. The inclined surfaces 43e and 53e are inclined relative to the discharge channels 43f and 53f such that, as the inclined surfaces 43e and 53e are closer to the discharge channels 43f and 53f, the cross sections of the flow passages become smaller.

As illustrated in Figs. 5 and 6, the attachment portions 42a, 43a, 52a and 53a define recesses along the first openings 41f and 51f. Seal members 47a, 47b, 57a and 57b for providing fluid tightness between the attachment portions 42a, 43a, 52a and 53a, and the first end faces 41c and 51c are accommodated in the recesses. The attachment portions 42a, 43a, 52a and 53a are attached to outer surfaces of the first end faces 41c and 51c with fittings such as screws.

As illustrated in Figs. 3, 5 and 6, the return members 44 and 54 are made of resin and molded with a molding die. The return members 44 and 54 include attachment portions 44a and 54a attached to the second end faces 41d and 51d, and pairs of protruding portions 44c and 54c protruding from the attachment portions 44a and 54a. The protruding portions 44c and 54c are generally triangular and include outer surfaces 44d and 54d and inclined surfaces 44e and 54e.

As illustrated in Figs. 3, 5 and 6, the protruding portions 44c and 54c are fitted into the second openings 41g and 51g, and the outer surfaces 44d and 54d come into contact with inner circumferential surfaces of the second openings 41g and 51g. The inclined surfaces 44e and 54e are inclined relative to the opposed flow passages 46a, 46b, 56a and 56b toward the other flow passages 46a, 46b, 56a and 56b. Specifically, the inclined surface 44e is inclined to approach the attachment portion 44a as the inclined surface 44e extends away from the outer surfaces 44d and the inclined surface 54e is inclined to approach the attachment portion 54a as the inclined surface 54e extends away from the outer surfaces 54d. Accordingly, it is possible for a heat medium to smoothly return and flow from the first flow passages 46a and 56a to the second flow passages 46b and 56b. Concave portions are formed along the second openings 41g and 51g in the attachment portions 44a and 54a. Seal members 47c and 57c providing fluid tightness between the attachment portions 44a and 54a and the second end faces 41d and 51d are accommodated in the recesses. The attachment portions 44a and 54a are attached to outer surfaces of the second end faces 41d and 51d with fittings such as screws.

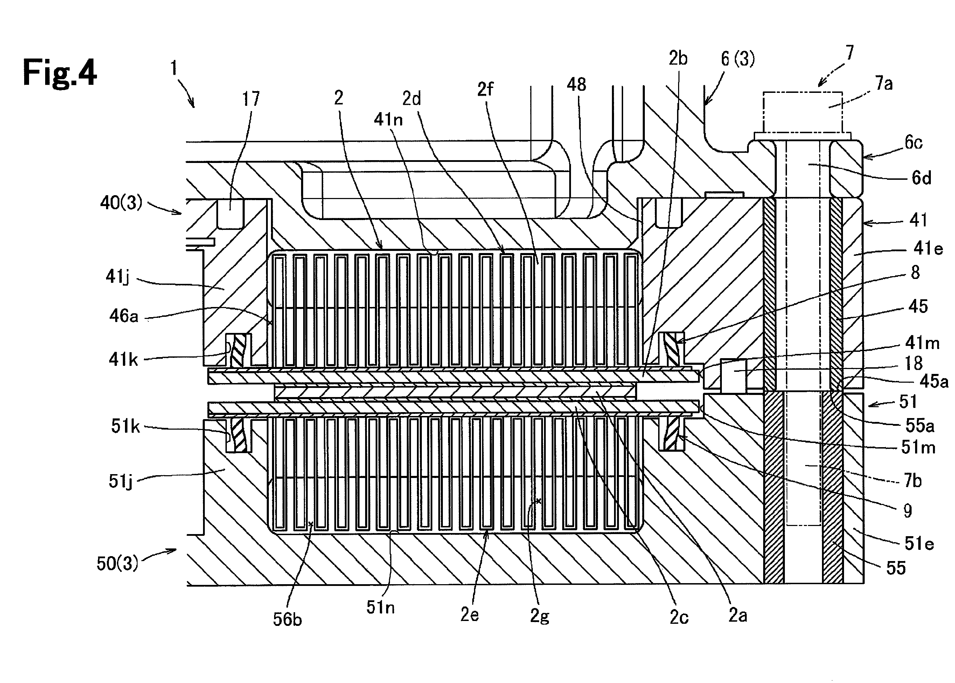

As illustrated in Figs. 3 and 4, the case bodies 41 and 51 include a plurality of cylinder portions 41e and 51e protruding outward from the side walls 41b and 51b. A metal tube 45 and 55 is provided in each cylinder portion 41e and 51e. The metal tubes 45 and 55 are formed of metal such as brass and are inserted in molding the case bodies 41 and 51. The metal tubes 45 and 55 penetrate the cylinder portions 41e and 51e in a height direction. The first metal tube 45 includes a protruding end 45a protruding from the cylinder portion 41e to the second metal tube 55. The second metal tube 55 includes a protruding end 55a protruding from the cylinder portion 51e to the first metal tube 45. The second metal tube 55 has a smaller inner diameter than that of the first metal tube 45. A female thread is formed on an inner circumferential surface of the second metal tube 55.

As illustrated in Fig. 4, accommodating recesses 41m and 51m and small recesses 41k and 51k are formed on opposed surfaces in the case bodies 41 and 51. The central part (the Peltier devices 2a and the substrates 2b and 2c) of the Peltier module 2 is housed in the accommodating recesses 41m and 51m. The depths of the accommodating recesses 41m and 51m are larger than the thickness of the central part of the Peltier module 2. Specifically, the thickness of the central part of the Peltier module 2 is smaller than the distance between the bottom surface 41n of the accommodating recess 41m and the bottom surface 51n of the accommodating recesses 51m when the case bodies 41 and 51 are assembled together. The small recesses 41k and 51k are formed along outer regions of the accommodating recesses 41m and 51m. Elastic members 8 and 9 are provided in the small recesses 41k and 51k.

As illustrated in Fig. 7, the elastic members 8 and 9 are made of rubber and are in the form of annular plates. The widths 8a and 9a of the elastic members 8 and 9 are larger than the thicknesses 8b and 9b of the elastic members 8 and 9. The elastic members 8 and 9 are formed in a manner to set the plate thicknesses 8a and 9a to a height direction and in a manner to be annular in a longitudinal direction. The elastic members 8 and 9 are formed in a square ring as similar to the small recesses 41k and 51k (see Fig. 4). The widths 8a and 9a are greater than the depths of the small recesses 41k and 51k (see Fig. 4). Accordingly, the elastic members 8 and 9 contact with the substrates 2b and 2c of the Peltier module 2 in an elastically deformed state. The elastic deformation amounts of the elastic members 8 and 9 are approximately 1 mm, for example. The elastic members 8 and 9 provide fluid tightness between the substrates 2b and 2c and the case bodies 41 and 51.

As illustrated in Fig. 4, an annular recess is formed outside the Peltier modules 2 in the case body 41. A seal member 18 for providing fluid tightness between the case body 41 and the case body 51 is provided in the recess. As illustrated in Fig. 3, a pair of openings 48 are formed at the center of the top portion 41a of the case body 41. The openings 48 are covered with the converter case 6.

As illustrated in Fig. 3, the converter case 6 is made of aluminum and integrally includes a bottom portion 6a and an external wall 6b extending upward on the periphery of the bottom portion 6a. A plurality of ring portions 6c protruding outward are formed on the external wall 6b. The ring portions 6c make contact with ends of the first metal tubes 45. As illustrated in Fig. 4, an annular recess is formed outside the opening 48 in the case body 41. A seal member 17 for providing fluid tightness between the case body 41 and the converter case 6 is provided in the recess.

As illustrated in Figs. 2 and 4, the cases 40 and 50 and the converter case 6 are stacked in the thickness direction and joined by connectors 7. The connector or bolt 7 integrally includes a head portion 7a and a screw body 7b that is thinner than the head portion 7a. A male thread is formed on an outer circumferential surface of a screw body 7b. The screw body 7b penetrates through a hole 6d of the ring portion 6c and the first metal tube 45, and is threaded into the second metal tube 55. The head portion 7a contacts with an end of the ring portion 6c. Alternatively, the screw body 7b may penetrate through the first metal tube 45, may be threaded to the second metal tube 55, and the head portion 7a may make contact with the end of the first metal tube 45.

As illustrated in Fig. 4, the Peltier module 2 that serves as a thermal member includes Peltier devices 2a, the substrates 2b and 2c, and fins 2d and 2e. The Peltier device 2a is formed of different metals, conductors or semiconductors. The Peltier device 2a exerts the Peltier effect by the feed of direct current, absorbs heat while either one of a first heat side and a second heat side serves as a heat absorber, and dissipates heat while the other serves as a heat dissipator. A plurality of Peltier devices 2a is provided between the first and second substrates 2b and 2c. The first heat side of the Peltier device 2a contacts with and is soldered to the first substrate 2b, and the second heat side of the Peltier device 2a contacts with and is soldered to the second substrate 2c.

As illustrated in Fig. 4, the fins 2d and 2e protrude from the substrates 2b and 2c in a direction opposite to the Peltier device 2a. The fins 2d and 2e are in the form of plate and zigzag. Gaps 2f and 2g are formed between the zigzags. The gaps 2f and 2g extend in longitudinal directions of the flow passages 46a, 46b, 56a and 56b in order not to block the flow passages 46a, 46b, 56a and 56b.

As illustrated in Fig. 2, a converter 16 is mounted on the converter case 6. The converter 16 is electrically connected to terminals 49 extending from the case body 41. The converter 16 converts a voltage input to the converter 16 into a predetermined voltage to supply direct current to the terminals 49. Direct current is supplied to the Peltier devices 2a of the Peltier modules 2 (see Fig. 4) via non-illustrated wiring extending from the terminals 49 within the case body 41. The supply of current causes the Peltier device 2a to absorb heat via the first fin 2d and the first substrate 2b, and dissipate heat via the second substrate 2c and the second fin 2e.

As illustrated in Fig. 1, the first heat medium is supplied by the pump 13 to the first case 40 via the pipes 20 and 21. As illustrated in Figs. 2 and 3, the first heat medium is introduced from the guide channel 42f to the first flow passage 46a, and is discharged from the discharge channel 43f via the second flow passage 46b. The first heat medium flows through the flow passages 46a and 46b and accordingly receives cold from the Peltier device 2a via the first fin 2d and the first substrate 2b (see Fig. 4).

As illustrated in Fig. 1, the second heat medium is supplied by the pump 15 to the second case 50 via the pipe 22. As illustrated in Figs. 2 and 3, the second heat medium is introduced from the guide channel 52f to the first flow passage 56a, and is discharged from the discharge channel 53f via the second flow passage 56b. The second heat medium flows through the flow passages 56a and 56b and accordingly receives heat from the Peltier device 2a via the second fin 2e and the second substrate 2c (see Fig. 4). As illustrated in Fig. 1, the second heat medium flows through the indoor heat exchanger 14 to release heat into the indoor air.

As illustrated in Fig. 3, the flow direction of the first heat medium in the first case 40 is opposed to the flow direction of the second heat medium in the second case 50. Therefore, a difference between the heat absorption side and heat dissipation side of the Peltier module 2 is small between the Peltier modules 2. Accordingly, the overall thermal efficiency is high.

As illustrated in Figs. 2 and 3, the first heat medium contacts with the converter case 6 via the openings 48 of the case body 41. The first heat medium receives the heat emitted from the converter 16 via the converter case 6. Therefore, the first heat medium cools the converter 16.

As described above, as illustrated in Figs. 3, 5 and 6, the heat exchanger 1 includes the housing 3, the guide members 42 and 52, the return members 44 and 54 and the discharge members 43 and 53. A plurality of parallel flow passages 46a, 46b, 56a and 56b are formed in the housing 3. The housing 3 has the first end faces 41c and 51c where the first openings 41f and 51f open to the first end of the plurality of flow passages 46a, 46b, 56a and 56b are provided, and the second end faces 41d and 51d where the second openings 41g and 51g open to the second end of the plurality of flow passages 46a, 46b, 56a and 56b are provided. The guide members 42 and 52 are fixed to the first end faces 41c and 51c at the positions of the first openings 41f and 51f. The guide members 42 and 52 define the guide channels 42f and 52f therein. Each return member 44 and 54 is fixed to the second end face 41d and 51d in a manner to extend over a pairs of the second openings 41g and 51g provided in the second end face 41d and 51d, for connecting the pairs of the second openings 41g and 51g in a returned manner. The discharge members 43 and 53 are fixed to the first end faces 41c and 51c at the positions of the first openings 41f and 51f. The discharge members define the discharge channels 43f and 53f therein. The plurality of flow passages 46a and 46b and 56a and 56b are connected by the return members 44 and 54 into single flow passages. The guide members 42 and 52 are provided in the openings 41f and 51f on the most upstream sides of the single flow passages, and the discharge members 43 and 53 are provided in the openings 41f and 51f on the most downstream sides of the single flow passages. The guide members 42 and 52, the return members 44 and 54 and the discharge members 43 and 53 integrally include the attachment portions 42a, 43a, 44a, 52a, 53a and 54a attached to the housing 3, and the protruding portions 42c, 43c, 44c, 52c, 53c and 54c protruding toward the housing 3 more than the attachment portions 42a, 43a, 44a, 52a, 53a and 54a and having the inclined surfaces 42e, 43e, 44e, 52e, 53e and 54e inclining with respect to the flow directions.

Therefore, the heat medium can be smoothly introduced, returned, or discharged in the flow passages 46a, 46b, 56a and 56b by the inclined surfaces 42e, 43e, 44e, 52e, 53e and 54e of the protruding portions 42c, 43c, 44c, 52c, 53c and 54c. In addition, the protruding portions 42c, 43c, 44c, 52c, 53c and 54c are integrally formed with the attachment portions 42a, 43a, 44a, 52a, 53a and 54a attached to the housing 3. Accordingly, the protruding portions 42c, 43c, 44c, 52c, 53c and 54c can be formed more easily than the case where the protruding portions 42c, 43c, 44c, 52c, 53c and 54c are integrally provided in the housing 3.

As illustrated in Figs. 5 and 6, the protruding portions 42c, 43c, 44c, 52c, 53c and 54c are fitted into the openings 41f, 41g, 51f and 51g of the housing 3. Therefore, spaces between the walls defining the openings 41f, 41g, 51f and 51g and the protruding portions 42c, 43c, 44c, 52c, 53c and 54c are small or eliminated. Accordingly, it is possible to prevent the heat medium from leaking from the spaces between the walls defining the openings 41f, 41g, 51fand 51g and the protruding portions 42c, 43c, 44c, 52c, 53c and 54c. Moreover, it is possible to easily position the protruding portions 42c, 43c, 44c, 52c, 53c and 54c relative to the housing 3.

As illustrated in Figs. 5 and 6, the seal members 47a, 47b, 47c, 57a, 57b and 57c are provided between the attachment portions 42a, 43a, 44a, 52a, 53a and 54a and the housing 3. Therefore, the seal members 47a, 47b, 47c, 57a, 57b and 57c can regulate the leakage of the heat medium in the housing 3 outside the housing 3 through the spaces between the attachment portions 42a, 43a, 44a, 52a, 53a and 54a and the housing 3. Moreover, since the seal members 47a, 47b, 47c, 57a, 57b and 57c are provided between the attachment portions 42a, 43a, 44a, 52a, 53a and 54a and the housing 3, the seal members 47a, 47b, 47c, 57a, 57b and 57c are unlikely to prevent the insertion of the protruding portions 42c, 43c, 44c, 52c, 53c and 54c into the housing 3.

As illustrated in Figs. 5 and 6, the guide members 42 and 52 include the protruding portions 42c and 52c, and the protruding portions 42c and 52c include the inclined surfaces 42e and 52e that enlarge the cross sections of the flow passages as the protruding portions 42c and 52c are farther from the guide channels 42f and 52f. The discharge members 43 and 53 include the protruding portions 43c and 53c, and the protruding portions 43c and 53c include the inclined surfaces 43e and 53e that reduce the cross sections of the flow passages as the protruding portions 43c and 53c are closer to the discharge channels 43f and 53f. Therefore, the pressure drop upon the introduction of the heat medium from the guide channels 42f and 52f to the flow passages 46a and 56a decreases and the pressure drop upon the discharge of the heat medium from the flow passages 46b and 56b to the discharge channels 43f and 53f decreases. Hence, it is possible to introduce and discharge the heat medium to and from the flow passages 46a, 46b, 56a and 56b more smoothly.

As illustrated in Figs. 5 and 6, the members 42, 43, 44, 52, 53 and 54 provided with the attachment portions 42a, 43a, 44a, 52a, 53a and 54a and the protruding portions 42c, 43c, 44c, 52c, 53c and 54c are made of resin. Therefore, the members 42, 43, 44, 52, 53 and 54 can be formed in a complicated shape easily compared with those made of metal.

As illustrated in Figs. 3 and 4, the heat exchanger 1 includes the thermal members, or Peltier modules 2 for exchanging heat with the heat medium in the flow passages 46a and 46b. The thermal member includes: the Peltier device 2a having a pair of heat sides, one of the heat sides absorbing heat and the other dissipating heat; the first substrate 2b making contact with the one of the heat sides; and the first fin 2d provided on the first substrate 2b, the first fin 2d being located in the flow passages 46a and 46b. Therefore, cold from the one heat side of the Peltier device 2a is transferred by the first fin 2d to the heat medium via the first substrate 2b.

As illustrated in Fig. 4, the thermal member, or Peltier module 2 includes the second substrate 2c making contact with the other heat side of the Peltier device 2a, and the second fin 2e provided on the second substrate 2c. The housing 3 includes the first case 40 where the flow passages 46a and 46b provided with the first fin 2d therein are formed and the second case 50 where the flow passages 56a and 56b provided with the second fin 2e therein are formed. Therefore, cold from the one heat side of the Peltier device 2a is transferred by the first fin 2d to the heat medium in the first cast 4. The heat from the other heat side of the Peltier device 2a is transferred by the second fin 2e to the heat medium in the second case 50.

The present invention is not limited to the above embodiment, and may be embodied as follows.

The heat exchange system 10 may be used for the heating or cooling of the interior of a vehicle. When the heat exchange system 10 is used for cooling, the first case 40 is connected to the pipe 22, and the second case 50 is connected to the pipe 21.

The heat exchange system 10 may be used for the air conditioning of the interior of a vehicle, may be used for the cooling or heating of vehicle parts such as a battery, or may be used for the cooling or heating of products other than a vehicle.

The case bodies 41 and 51 may be made of resin or die cast aluminum.

Baffle plates for changing the flow of the heat medium may be integrally provided with the guide members 42 and 52, the discharge members 43 and 53, or the return members 44 and 54.

The elastic members 8 and 9 may or may not be provided between the Peltier module 2 and the case bodies 41 and 51. Alternatively, either of the elastic members 8 and 9 may be provided. Alternatively, the substrates 2b and 2c may be elastically held by the case bodies 41 and 51 through a liquid gasket. Alternatively, the small recesses 41k and 51k in the case bodies 41 and 51 may be omitted, and elastic members may be provided between the case bodies 41 and 51 and the substrates 2b and 2c.

The heat media supplied to the cases 40 and 50 may be fluid or gas.

The cases 40 and 50 may include the case bodies 41 and 51 made of resin and the metal tubes 45 and 55 made of metal. Alternatively, the case bodies 41 and 51 may integrally or separately include the case bodies 41 and 51 made of metal and the metal tubes 45 and 55.

In the housing 3, the flow passages 46a and 46b for exchanging heat with the heat absorption side of the Peltier module (thermal member) 2 and the flow passages 56a and 56b for exchanging heat with the heat dissipation side of the Peltier module (thermal member) 2 may be formed. Alternatively, only the flow passages 46a and 46b on the heat absorption side may be formed and the heat dissipation side may exchange heat with the air, or a flow passage on the heat dissipation side may be formed in another housing. Alternatively, only the flow passages 56a and 56b on the heat dissipation side may be formed in the housing 3, and the heat absorption side may exchange heat with the air, or a flow passage on the heat absorption side may be formed in another housing.

The guide member 42 and 52 and the discharge member 43 and 53 may be attached to the first end face 41c and 51c or the second end face 41d and 51d of the housing 3. The return member 44 and 54 may be attached to the second end face 41d and 51d or the first end face 41c and 51c of the housing 3. The guide members 42 and 52 and the discharge members 43 and 53 may be attached to the same or different end face of the housing 3. The return members 44 and 54 may be attached to an end face different from or same as an end face of the housing 3 where the guide members 42 and 52 or the discharge members 43 and 53 are attached.

In the housing 3, the parallel two flow passages 46a and 46b and 56a and 56b may be formed. Alternatively, three or more parallel flow passages may be formed, and the guide members 42 and 52, the discharge members 43 and 53, and the return members 44 and 54, which correspond to the flow passages, may be attached.

The inclined surfaces 42e, 43e, 44e, 52e, 53e and 54e of the protruding portions 42c, 43c, 44c, 52c, 53c and 54c may be flat surfaces or curved surfaces.

The thermal member may be the Peltier module 2, another member that emits heat and supplies the heat to the heat medium, or still another member that absorbs heat and supplies cold to the heat medium.

The attachment portions 42a, 43a, 44a, 52a, 53a and 54a may have a plate shape or another shape.

The thermal member 2 may include the fins 2d and 2e extending into the flow passages 46a, 46b, 56a and 56b, may include one or more members adjacent to the housing 3 and in contact with the heat media in the flow passages 46a, 46b, 56a and 56b, or may be adjacent to the housing 3 to exchange heat with the heat media in the flow passages 46a, 46b, 56a and 56b via the wall surface of the housing 3.

A heat exchanger (1) comprises a housing (3), a guide member (42, 52), a return member (44, 54) and a discharge member (43, 53). The housing (3) includes a plurality of parallel flow passages (46a, 46b, 56a, 56b). The housing includes a first end face (41c, 51c) and a second end face (41d, 51d) each having openings (41f, 41g, 51f, 51g). The guide member (42, 52) is fixed to either the first face (41c, 51c) or the second end face (41d, 51d). The return member (44, 54) is fixed to the first end face (41c, 51c) or the second end face (41d, 51d) in a manner to extend over a pair of the openings (41f, 41g, 51f, 51g), for connecting the pair of openings (41f, 41g, 51f, 51g) in a returned manner. The discharge member (43, 53) is fixed to either the first face (41c, 51c) or the second end face (41d, 51d). The plurality of flow passages (46a, 46b, 56a, 56b) are connected by the return member (44, 54) into a single flow passage. The guide member (42, 52) is provided in the opening (41f, 41g, 51f, 51g) on a most upstream side of the single flow passage. The discharge member (43, 53) is provided in the opening (41f, 41g, 51f, 51g) on a most downstream side of the single flow passage. At least one of the guide member (42,52), the return member (44, 54) and the discharge member (43, 53) integrally includes an attachment portion (42a, 43a, 44a, 52a, 53a, 54a) attached to the housing (3); and a protruding portion (42c, 43c, 44c, 52c, 53c, 54c) protruding more than the attachment portion (42a, 43a, 44a, 52a, 53a, 54a) toward the housing (3) and including an inclined surface (42e, 43e, 44e, 52e, 53e, 54e).

## Claims

1. A heat exchanger (1) comprising:
a housing (3) comprising a plurality of parallel flow passages (46a, 46b, 56a, 56b), the plurality of flow passages (46a, 46b, 56a, 56b) including a first end and a second end; a first end face (41c, 51c) having openings (41f, 41g, 51f, 51g) open to the first end of the plurality of flow passages (46a, 46b, 56a, 56b); and a second end face (41d, 51d) having openings (41f, 41g, 51f, 51g) open to the second end of the plurality of flow passages (46a, 46b, 56a, 56b);
a guide member (42, 52) fixed to either the first face (41c, 51c) or second end face (41d, 51d) at a position of one of the openings (41f, 41g, 51f, 51g) and having a guide channel (42f, 52f);
a return member (44, 54), fixed to the first end face (41c, 51c) in a manner to extend over a pair of the openings (41f, 41g, 51f, 51g) in the first end face (41c, 51c) or fixed to the second end face (41d, 51d) in a manner to extend over a pair of the openings (41f, 41g, 51f, 51g) in the second end face (41d, 51d), for connecting the pair of openings (41f, 41g, 51f, 51g) in a return manner; and
a discharge member (43, 53) fixed to either the first face (41c, 51c) or second end face (41d, 51d) at the position of one of the openings (41f, 41g, 51f, 51g) and having a discharge channel (43f, 53f),
wherein the plurality of flow passages (46a, 46b, 56a, 56b) are connected by the return member (44, 54) into a single flow passage,
the guide member (42, 52) is provided in the opening (41f, 41g, 51f, 51g) on a most upstream side of the single flow passage,
the discharge member (43, 53) is provided in the opening (41f, 41g, 51f, 51g) on a most downstream side of the single flow passage, and
at least one of the guide member (42, 52), the return member (44, 54) and the discharge member (43, 53) integrally includes an attachment portion (42a, 43a, 44a, 52a, 53a, 54a) attached to the housing (3); and a protruding portion (42c, 43c, 44c, 52c, 53c, 54c) protruding more than the attachment portion (42a, 43a, 44a, 52a, 53a, 54a) toward the housing (3) and including an inclined surface (42e, 43e, 44e, 52e, 53e, 54e) inclining relative to a flow direction.

2. The heat exchanger (1) according to claim 1, **characterized in that** the protruding portion (42c, 43c, 44c, 52c, 53c, 54c) is fitted into the opening (41f, 41g, 51f, 51g) of the housing (3).

3. The heat exchanger (1) according to claim 1 or claim 2, **characterized in that** a seal member (47a, 47b, 47c, 57a, 57b, 57c) is provided between the attachment portion (42a, 43a, 44a, 52a, 53a, 54a) and the housing (3).

4. The heat exchanger (1) any one claims 1 to 3, **characterized in that**
the guide member (42, 52) comprises the protruding portion (42c, 52c), the protruding portion (42c, 52c) including the inclined surface (42e, 52e) for enlarging a cross section of the flow passage (46a, 46b, 56a, 56b) as the protruding portion (42c, 52c) is farther from the guide channel (42f, 52f), and
the discharge member (43, 53) comprises the protruding portion (43c, 53c), the protruding portion (43c, 53c) including the inclined surface (43e, 53e) for reducing a cross section of the flow passage (46a, 46b, 56a, 56b) as the protruding portion (43c, 53c) is closer to the discharge channel (43f, 53f).

5. The heat exchanger (1) according to any one of claims 1 to 4, **characterized in that** the guide member (42, 52), the return member (44, 54 and the discharge member (43, 53) include the attachment portion (42a, 43a, 44a, 52a, 53a, 54a) and the protruding portion (42c, 43c, 44c, 52c, 53c, 54c) are made of resin.

6. The heat exchanger (1) according to any one of claims 1 to 5, **characterized in that** the heat exchanger (1) further comprises a thermal member (2) for exchanging heat with a heat medium in the flow passage (46a, 46b, 56a, 56b),
wherein the thermal member (2) includes
a Peltier device (2a) having a pair of heat sides, one of the heat sides absorbing heat and the other dissipating heat;
a first substrate (2b) brought into contact with the one of the heat sides; and
a first fin (2d) provided on the first substrate (2b), the first fin (2d) being located in the flow passage (46a, 46b).

7. The heat exchanger (1) according to claim 6, **characterized in that** the thermal member (2) includes
a second substrate (2c) brought into contact with the other heat side of the Peltier device (2a); and a second fin (2e) provided on the second substrate (2c), and
the housing (3) includes a first case (40) where the flow passage (46a, 46b) provided with the first fin (2d) therein is formed; and a second case (50) where the flow passage (56a, 56b) provided with the second fin (2e) therein is formed.

8. The heat exchanger (1) according to any one of claims 1 to 7, **characterized in that** the housing (3) includes a first case (40) and a second case (50) that are stacked in a thickness direction, wherein each of the first case (40) and the second case (50) has the guide member (42, 52), the return member (44, 54) and the discharge member (43, 53).

9. The heat exchanger (1) according to claim 8, **characterized in that**
the flow direction of a heat medium in the first case (40) is opposed to the flow direction of a second heat medium in the second case (50).
